# EUROPEAN PATENT SPECIFICATION

(11) **EP 1 243 486 B1**
(45) Date of publication and mention of the grant of the patent: **20.10.2004**
(21) Application number: 02003134.0
(22) Date of filing: 14.02.2002
(51) Int. Cl.: B60R 22/44, B60R 22/02

(54) **Motor retractor system**
Motorbetriebenes Gurtaufwickelsystem
Système de ceinture de sécurité avec un rétracteur motorisé

(30) Priority: 19.03.2001 JP 2001077998
(43) Date of publication of application: 25.09.2002
(73) Proprietor: TAKATA CORPORATION, Minato-ku, Tokyo 106-8510 (JP)
(72) Inventor: Tanji, Hiromasa, Takata Corporation, Tokyo 106-8510 (JP)
(74) Representative: Banzer, Hans-Jörg, Dipl.-Ing.

(56) References cited:
- WO-A-00/21801
- DE-A- 4 332 205
- US-A- 4 655 312
- US-A- 5 558 370
- US-A- 5 634 664
- US-A- 5 788 281
- PATENT ABSTRACTS OF JAPAN vol. 018, no. 653 (M-1720), 12 December 1994 (1994-12-12) -& JP 06 255447 A (NIPPONDENSO CO LTD), 13 September 1994 (1994-09-13)

## Description

### [Technical Field of the Invention]

The present invention relates to a motor retractor system, in which when paying out seat belt webbing, a motor of a winding device is not driven, while the motor is driven to wind the seat belt webbing when an occupant is released from being restrained by the seat belt webbing.

### [Description of the Related Art]

In a conventional retractor equipped in an automobile, etc., the seat belt webbing is paid out with a through-tongue from a spool of a winding device fitted in the automobile and an occupant is restrained in a seat due to the tension in the winding direction of the seat belt webbing paid out from the spool by coupling the through-tongue in a buckle.

However, since the seat belt webbing is in contact with a body of the occupant at all times, when the tension is too large, a large oppressing force is applied to the occupant, causing discomfort of the occupant. On the other hand, when the tension is too small, the retracting force during winding of the webbing is reduced so that the winding of the seat belt webbing becomes sluggish.

Also, in the conventional retractor, since a single return spring is built therein, with increasing in the amount of payout of webbing, the return spring is wound so as to increase its urging force, also resulting in increase in the retracting force.

As means for solving the problem due to using such a single return spring, the applicant has developed a tension-reducer mechanism formed of two truncated cone-shaped rope pulleys having spiral guide grooves (see Japanese Patent Publication No. 2711428) and so forth.

On the other hand, as functions of the seat-belt winding device, a seat belt winding device for an occupant restraint and protection system has been also developed (see Japanese Unexamined Patent Application Publication No. 9-132113), in which other than securely restraining and protecting an occupant upon an emergency, comfortableness (comfort performance) during wearing the belt webbing under normal conditions has been increased, and a tension control of the seat belt webbing has been performed with an electric motor by detecting the distance to vehicles in front and behind during vehicle moving.

### [Problems to be Solved by the Invention]

However, in most retractor apparatuses for winding seat-belt webbing using a motor, there have been problems that the motor control is needed to monitor the seat-belt payout performed by an occupant, the position of the seat-belt payout, the tension in the seat-belt webbing, and the amount of rotation of a spool, with various sensors and encoders, further that when electrical signals and electrical power are shut down, the seat-belt restraining operation using other means is required, and that on the other hand, comfortableness may be reduced by exerting thereupon the restraining force due to a power spring as it is.

In US 4,655,312 showing the features of the preamble of claim 1 a seat belt retractor actuated by an electric motor is disclosed. When a seat belt associated with this seat belt retractor is buckled, it is first wound up tightly against a shoulder of a user of the seat belt. Then, the motor is reversed to slacken the seat belt a predetermined amount to provide more comfort to the user.

In order to solve the problems described above, the present invention has been made, and it is an object of the present invention to provide a motor retractor system capable of restraining an occupant in a seat with a comparatively small force without causing oppressing feelings and capable of quickly storing the seat belt webbing into a winding device upon completion of using the seat belt, while payout operation of the seat belt webbing can be comfortably performed.

### [Means for Solving the Problems]

According to the present invention, this object is achieved by a motor retractor system as defined in Claim 1. The dependent claims define preferred and advantageous embodiments of the present invention.

In order to achieve the above-mentioned object, a motor retractor system according to Claim 1 comprises a first winding device having a motor driven in the winding direction of a shoulder belt webbing, a second winding device having a tension-applying device for applying a constant tension in the winding direction to a lap belt webbing which is continuing from the shoulder belt webbing via a through-tongue, and a control unit for controlling and driving the motor when the through-tongue, which is mounted in a buckle, is released from the buckle. The motor is driven only when the through-tongue is released from the buckle. Thereby, while the payout of the shoulder belt webbing can be smoothly performed, when the through-tongue is buckled up, an occupant can be restrained lightly by the seat belt to such an extent that slack is eliminated, and when the through-tongue is released from the buckle, the seat belt can be promptly stored onto the first winding device.

In a motor retractor system according to Claim 2, the control unit may drive the motor of the first winding device in the winding direction when the through-tongue is released from the buckle. Thereby, the winding by the first winding device can be promptly performed.

A motor retractor system according to Claim 3 may further comprise belt-storage detecting means disposed in the first winding device and the second winding device for detecting a stored state of the shoulder belt webbing or the lap belt webbing. Thereby, the seat belt length wound onto the first winding device and the seat belt length paid out from the second winding device can be substantially precisely monitored.

In a motor retractor system according to Claim 4, when the belt storage state detected by the belt-storage detecting means reaches a predetermined point, the winding of the shoulder belt webbing by the first winding device may be stopped. Thereby, the re-payout of the seat belt can be performed.

In a motor retractor system according to Claim 5, when an occupant is wearing the shoulder belt webbing and the lap belt webbing, a winding force may be generated only in the second winding device without generating the winding force in the first winding device. Thereby, the occupant can be comfortably restrained in the seat due to the small restraining force produced by the second winding device.

### [Brief Description of the Drawings]

Fig. 1 is a perspective view of a motor retractor system according to an embodiment of the present invention.
Fig. 2 is a perspective view of the motor retractor system shown in Fig. 1 showing a using state thereof.
Fig. 3 is a perspective view schematically showing a first winding device shown in Fig. 1.
Fig. 4 is a perspective view schematically showing a second winding device shown in Fig. 1.
Fig. 5 is a block diagram of a control device for driving a motor shown in Fig. 3.
Fig. 6 is a schematic representation sequentially showing the operation of the motor retractor system according to the present invention.

### [Description of the Embodiments]

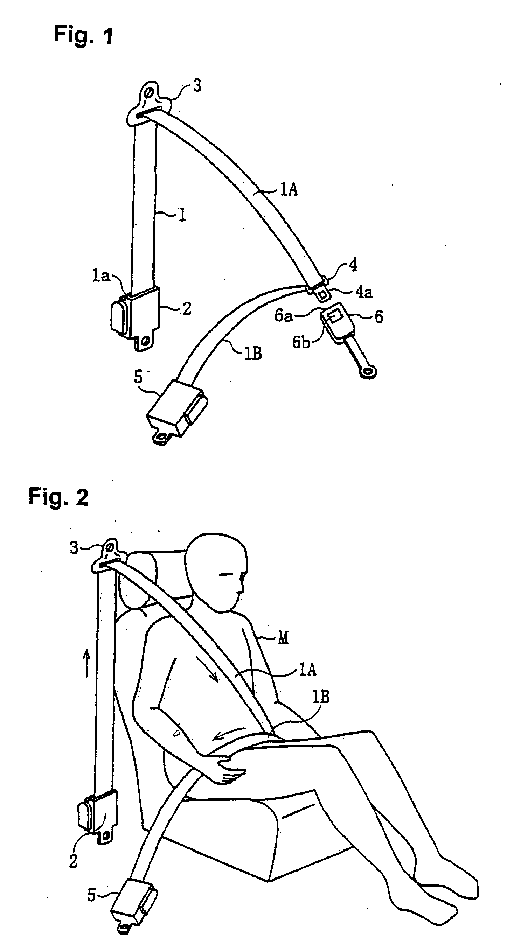

An embodiment according to the present invention will be described below with reference to the drawings. Figs. 1 and 2 are a perspective view of a motor retractor system according to the present invention and a schematic representation of a method for using the motor retractor system, respectively. In the drawings, numeral 1 denotes a continuous webbing, one end 1a of which is fixed to and wound onto a spool in a first winding device 2 disposed in the vicinity of a floor within a pillar (not shown). From a state of extending upwardly, the continuous webbing is obliquely downwardly guided with a through-anchor 3 attached to the upper end of the pillar and it forms shoulder belt webbing 1A ranging from the guided point. Furthermore, the shoulder belt webbing 1A is folded back by a through-tongue 4, with which the shoulder belt webbing 1A is brought into the vicinity of the boundary to an adjacent seat, so as to form lap belt webbing 1B to stride over across a seat.

Also, the end of the lap belt webbing 1B is wound onto and fixed to a spool in a second winding device 5 disposed on the floor. In addition, the through-tongue 4 is mountable in a buckle 6 disposed at a predetermined position between adjacent seats, and when being mounted, the chest and the pelvis of an occupant M are simultaneously restrained. The through-tongue 4 and the buckle 6 are similar in strength and shape to those used in a conventional seat belt apparatus, and when wearing the seat belt, a tongue plate 4a of the through-tongue 4 is inserted into and connected to a retainer hole 6a of the buckle 6. In order to separate the through-tongue 4 therefrom, by pressing a press button 6b of the buckle 6 to operate a built-in rejecting mechanism, the connection can be easily cancelled.

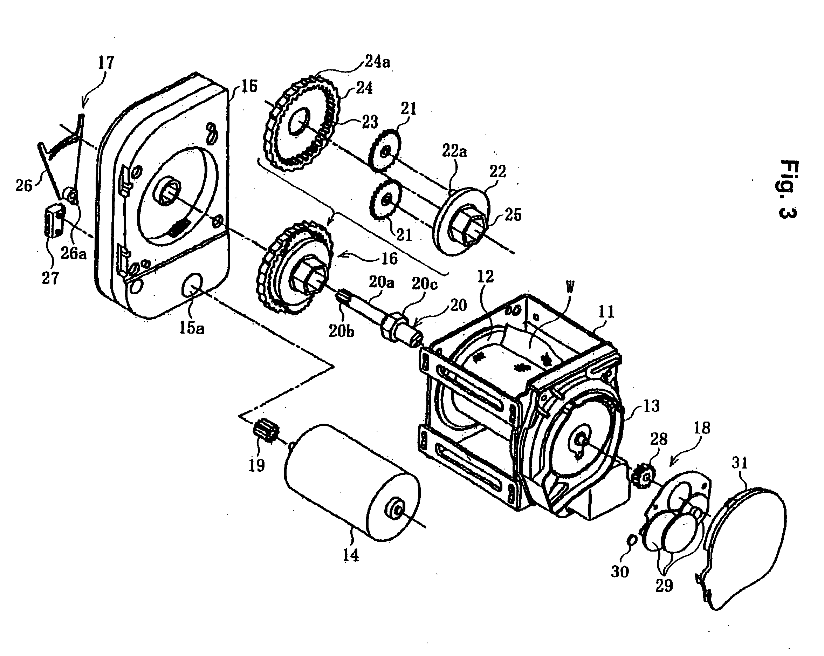

The first winding device 2, as shown in an assembly view of Fig. 3, comprises a spool 12, which is rotatably supported to a U-shaped base frame 11 and which has a circumferential surface onto which one end side of the continuos webbing W is wound, a spool-locking mechanism 13 disposed integrally with the base frame 11 for locking the rotation of the spool 12, a motor 14 as a driving source of a spool shaft 20, a reduction mechanism casing 15 having a reduction mechanism accommodated therewithin, a planetary gear unit 16 forming a part of the reduction mechanism, a webbing-payout detector 17 for motor controlling, and a spool-rotation detector 18.

The reduction mechanism has two systems of reduction mechanisms and the winding operation of the spool 12 can be achieved via any one of the systems. On a side wall of the base frame 11, a supporting hole (not shown) is formed, into which a flange of the spool 12 is fitted with a clearance, and a engagement pawl, which rotates by the locking movement of the spool-locking mechanism 13, is engaged with a sawtooth portion formed in the internal circumference of the supporting hole. Therefore, due to this engaging operation, when the continuos webbing W is rapidly pulled out, the rotation of the spool 12 is locked so as to stop the payout of the continuos webbing W.

The motor 14 has a motor gear 19 fitted to a driving shaft of the motor 14, and the motor gear 19 is meshed with a two-stage gear (not shown) inside the reduction mechanism casing 15 via a lower hole 15a thereof, and the two-stage gear is meshed with a reduction gear. A boss of the reduction gear for a rotation shaft is fitted to a bush formed coaxially with a sun gear fitted to a protruding shaft 20a of the spool shaft 20 with a clearance, so that the entire reduction gear is rotatably supported by the protruding shaft 20a. On a side surface of the reduction gear, a rotary damper (not shown) for applying a resisting torque is disposed. Within the reduction gear accommodated is a spool-shaft input gear (not shown) fixed to a hexagonal spline 20b at the end of the protruding shaft 20a. By the rotation of the spool-shaft input gear, a predetermined rotational torque is applied to the spool shaft 20.

The planetary gear unit 16 comprises two planetary gears 21 which are meshed with the sun gear rotating together with the reduction gear, a carrier 22 rotating coaxially with the sun gear for rotatably supporting the planetary gears 21 on shafts 22a, and an internal gear 24 having internal gear teeth 23 which are meshed with the planetary gears 21. The carrier 22 has a hexagonal socket 25 formed at the rear thereof, and a hexagonal shaft portion with an increased diameter 20c of the spool shaft 20 is fitted into the socket 25. The external circumference of the internal gear 24 has ratchet teeth 24a formed therein, and when a claw mechanism (not shown) is retained with the ratchet teeth 24a, the internal gear 24 is stopped rotating, so that the rotation input from the sun gear is transmitted to the carrier 22 rotating together with planetary gears 21 so as to enable the spool shaft to be rotated via the socket 25 at a large reduction ratio.

In addition, the webbing-payout detector 17 operates a limit switch 27 with a protruded piece 26a of a switch plate 26 in accordance with the rotation of the spool-shaft input gear so as to detect the payout of the webbing and to stop the motor 14. The spool-rotation detector 18 disposed outside the spool-locking mechanism 13 comprises a gear 28 attached at the end of the spool shaft 20, a gear train with three gears 29 for reducing the rotation of the gear 28, and a potentiometer 30 for detecting the reduced rotational angle as a resistance variation. The potentiometer 30 serves as belt-storage detecting means which will be described later. Numeral 31 denotes a cover for covering the potentiometer 30 and the gear train 29.

Therefore, in the first winding device 2, by transmitting the rotation of the motor 14 to the spool shaft 20 via the reduction mechanism and the planetary gear unit 16 which are accommodated within the reduction mechanism casing 15, the winding of the continuous webbing is performed with the spool 12. When driving electric current is stopped supplying to the motor 14, the spool shaft 20 becomes rotatable together with the reduction mechanism and the planetary gear unit 16. However, by the resistance due to the gear ratio and friction of the reduction mechanism and the planetary gear unit 16, the spool 12 cannot rotate freely, so that the continuous webbing cannot be paid out pointlessly.

The motor 14 is driven only in the direction winding the shoulder belt webbing 1A when the through-tongue 4 is separated from the buckle 6. When the shoulder belt webbing 1A is stored within the first winding device 2, since the motor 14 is in the non-power state, the shoulder belt webbing 1A can be paid out extremely smoothly from the spool 12 in the first winding device 2. In addition, when the change gear ratio of the reduction mechanism is large, mechanical hysteresis is correspondingly exhibited. Therefore, by the hysteresis due to the friction of the through-anchor 3 and the shoulder belt webbing 1A together with the aforementioned hysteresis, the shoulder belt webbing 1A is not paid out from the first winding device 2 freely as mentioned above. In addition, the first winding device 2 has the potentiometer 30 as belt-storage detecting means for detecting a stored state of the shoulder belt webbing 1A.

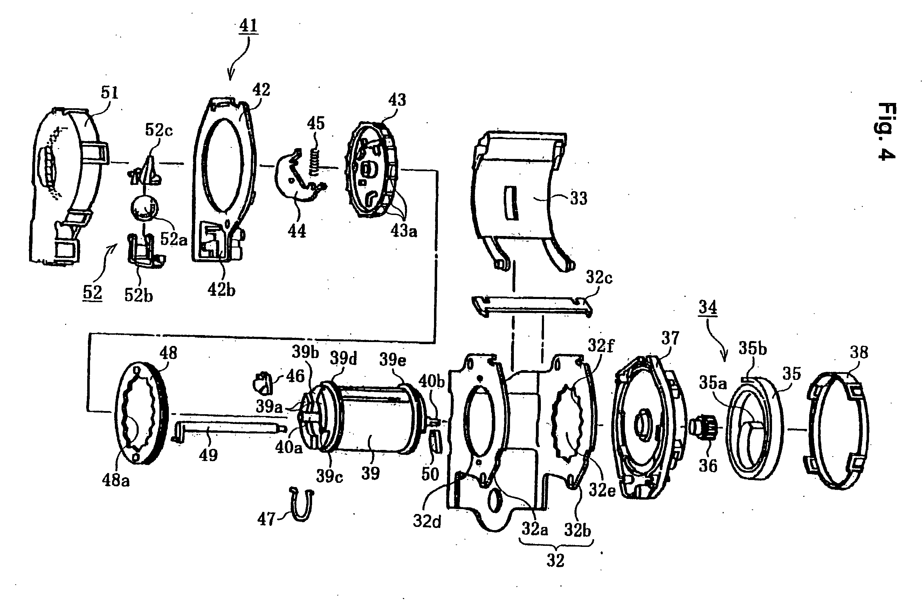

The second winding device 5, as shown in Fig. 4, for example, comprises a substantially U-shaped frame 32 having right-and-left side-walls 32a and 32b which are reinforced with a connecting member 32c connecting them. Numeral 33 denotes a webbing guide for covering the front side of the frame 32. The left side-wall 32a has a circular opening 32d formed thereon while the right side-wall 32b has an opening 32e formed thereon with angular teeth 32f formed in the internal periphery thereof.

To the right side-wall 32b, a tension-applying device 34 for winding is attached. The tension-applying device 34 comprises a spiral spring 35, a bush 36 connected to the internal peripheral end 35a of the spiral spring 35 so that a spring force is to be applied thereto, a spring case 37 for fixing the external peripheral end 35b of the spiral spring 35 and accommodating the spiral spring 35 therewithin, and a cover 38 attached to the spring case 37.

Between the right-and-left side-walls 32a and 32b of the frame 32, a reel shaft 39 for winding the lap belt webbing 1B is arranged. On the right-and-left side-walls of the reel shaft 39, rotation shafts 40a and 40b are arranged at the center.. Also, on the left side-wall of the reel shaft 39, a pair of projections 39a are formed, and an interstice 39b is formed between them. On the left side-wall, a recess (not shown) is formed, and an axial direction hole 39c is formed so as to open from the interstice 39b and the recess. Numerals 39d and 39e denote flanges disposed in the external peripheries at both ends of the reel shaft 39 for guiding the lap belt webbing.

Furthermore, on the left side-wall 32a of the frame 32, seat-belt locking operating means 41 is arranged. The seat-belt locking operating means 41 comprises a retainer 42 fixed to the left side-wall 32a, a locking gear 43, an inertial element 44 rotatably attached to the locking gear 43, a control spring 45 arranged between the locking gear 43 and the inertial element 44, a main pawl 46 arranged in the interstice 39b of the reel shaft 39, an Ω-shaped return spring 47 arranged between the reel shaft 39 and the main pawl 46, an internal gear 48 fixed to the left side-wall 32a together with the retainer 42 and having angular teeth 48a formed in the internal periphery thereof, a joint pin 49 inserted into the axial direction hole 39c, a back-up pawl 50 connected to one end of the joint pin 49, and a cover 51 for covering the locking gear 43.

The retainer 42 has a large hole 42a for accommodating the internal gear 48 at the center, and in the lower part, it has a fitting part 42b for fitting deceleration sensing means 52 comprising an inertial ball 52a, a supporting bed 52b for supporting the inertial ball 52a, and an actuator 52c attached to the supporting bed 52b and which rotates due to the movement of the inertial ball 52a. In addition, although not shown, a potentiometer is attached to the rotation shaft 40a or the rotation shaft 40b as belt-storage state detecting means.

In such a second winding device 5, in a state that deceleration is not exerted on a vehicle, since the inertial ball 52a on the supporting bed 52b forming the deceleration sensing means 52 does not move, the actuator 52c also is not displaced. Therefore, there is no engagement between the actuator 52c and teeth 43a of the locking gear 43, a retaining claw of the inertial element 44, the main pawl 46, and the back-up pawl 50 are also in a non-engagement state. Therefore, in the second winding device 5, the operation of the tension-applying device 34 is mainly performed. Accordingly, the reel shaft 39 is urged in the winding direction of the lap belt webbing 1B due to the spring force of the spiral spring 35 so that the lap belt webbing 1B is to be wound. When the seat belt webbing is not worn, since the through-tongue 4 is separated from the buckle 6, the lap belt webbing 1B is in the wound state as described above.

On the other hand, when the lap belt webbing 1B is paid out together with the shoulder belt webbing 1A, the reel shaft 39 and the bush 36 are rotated in the payout direction, so that the spiral spring 35 is wound and tightened. When an occupant connects the through-tongue 4 to the buckle 6 after the payout operation, the shoulder belt webbing 1A and the lap belt webbing 1B are in a state of paid out longer than the payout length in the regular wearing state. Then, when the occupant stops paying out and moves one's hand off, the belt webbing 1A, 1B is wound until it fits the body of the occupant due to the spring force of the spiral spring 35. At this time, the spring force of the spiral spring 35 is appropriately set so that it does not cause oppressing feelings for the occupant. During driving of the vehicle, this state is maintained as long as deceleration is not exerted.

During driving of the vehicle, when deceleration is exerted on the vehicle due to a sharp braking, etc., the inertial ball 52a of the deceleration sensing means 52 is moved so that the actuator 52c is rotated. Accordingly, the retaining claw of the actuator 52c is brought into engagement with the teeth 43a in the external periphery of the locking gear 43. At this time, the occupant body moves forwardly due to the deceleration, so that the reel shaft 39 and the locking gear 43 are going to rotate in the payout direction of the lap belt webbing 1B. However, the locking gear 43 is immediately stopped rotating due to the retaining of the inertial element 44 relative to the stopper on the locking gear 43. As a result, only the reel shaft 39 is rotated in the payout direction, so that relative rotation between the locking gear 43 and the reel shaft 39 is produced.

Also, due to the relative rotation, the main pawl 46 and the back-up pawl 50 are rotated and brought into engagement with the teeth 48a and the teeth 32f, respectively. Therefore, the reel shaft 39 is restricted from rotating in the payout direction, so that the lap belt webbing 1B is securely blocked from being paid out by the inertial force exerted to the occupant body.

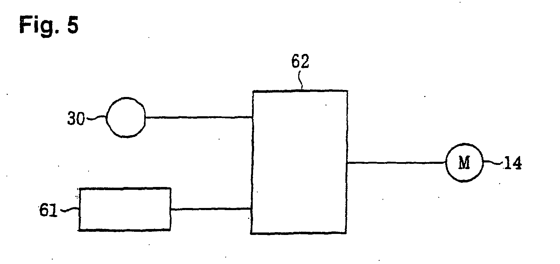

Fig. 5 shows a control circuit for controlling the driving of the motor 14. The control circuit comprises a buckle switch 61 for detecting the insertion and release between the through-tongue 4 and the buckle 6, the potentiometer 30 for detecting the amount of rotating of the motor 14, and a control device 62 for driving the motor 14 in the winding direction of the shoulder belt webbing 1A when the buckle switch 61 is turned off. The control device 62 always monitors the stored state of the shoulder belt webbing 1A based on the detecting output of the potentiometer 30, and it stops driving the motor 14 when the winding amount reaches a predetermined value.

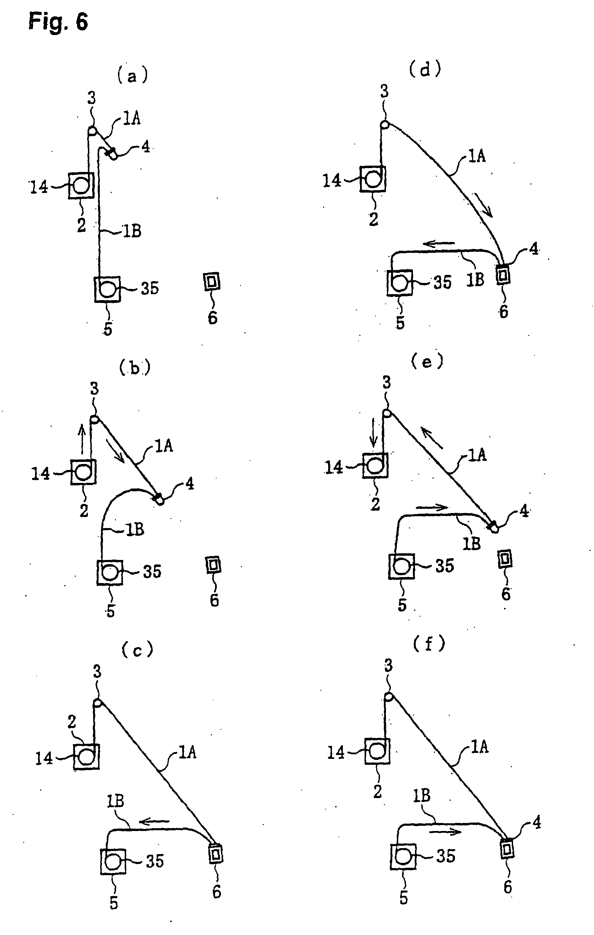

Next, the operation of the motor retractor system will be described with reference to Fig. 6. First, when an automobile is parked in a garage, etc., so that the seat belt is not used, as shown in Fig. 6 (a), the shoulder belt webbing 1A is sufficiently wound onto the spool 12 in the first winding device 2 and is stored thereinto, while the lap belt webbing 1B is stored onto the reel shaft 39 in the second winding device 5 due to the winding force of the spiral spring 35 in the tension-applying device 34 applied thereto. When an occupant sitting on a seat pulls the shoulder belt webbing 1A downwardly while grappling the through-tongue 4 positioned in the vicinity of the through-anchor 3 with the hand in order to use the seat belt, the shoulder belt webbing 1A is paid out of the first winding device 2 via the through-anchor 3.

Since the control device 62 stops supplying driving electric current to the motor 14 at this time, the shoulder belt webbing 1A can be paid out very smoothly while maintaining a small predetermined holding-resistance due to mechanical hysteresis characteristics of its own due to the reduction mechanism and the planetary gear unit 16. In addition, also due to hysteresis characteristics produced between the through-anchor 3 and the shoulder belt webbing 1A, an extremely small holding resistance is produced between them. By the payout operation of the shoulder belt webbing 1A, also from the reel shaft 39 in the second winding device 5, the lap belt webbing 1B is slightly paid out against the spring force of the spiral spring 35 so as to be the state shown in Fig. 6(b).

In such a manner, when the shoulder belt webbing 1A is paid out together with the lap belt webbing 1B, and the through-tongue 4 is mounted into the buckle 6, as shown in Fig. 6(c), the shoulder belt webbing 1A holds the paid out position by hysteresis characteristics due to the through-anchor 3 and the through-tongue 4. On the other hand, to the lap belt webbing 1B, the small tension due to the spiral spring 35 is applied. Therefore, the tension is exerted on the pelvis of the occupant on the seat as the restraint force; however, it does not cause oppressing feelings. Also, due to the small tension, slack of the shoulder belt webbing 1A is eliminated.

Since electric current is not supplied to the motor 14 at this state, the electric power is not consumed during riding of an occupant onto a vehicle and vehicle running. Even when an occupant moves one's body on a seat by some sort of reason, as shown in Fig. 6(d), the shoulder belt webbing 1A is required only smoothly paying out from the first winding device 2. At this time, to the lap belt webbing 1B, the tension due to the spiral spring 35 is applied as the restraint force. In addition, the spiral spring 35 functions as a fail-safe system when the electric power supply is stopped to the motor 14 and the control device 62, etc.

On the other hand, when the occupant removes the through-tongue 4 from the buckle 6 by operating the press button 6b while sitting on the seat in order to leave the automobile, the buckle switch 61 is turned on, so that upon the on-signal, the control device 62 supplies a predetermined amount of electric current to the motor 14. Therefore, the motor 14 functions to wind the shoulder belt webbing 1A up onto the spool 12 for the extent of the shoulder belt webbing which had been paid out largely until this time. At this time, the lap belt webbing 1B wound onto the reel shaft 39 is paid out by the amount wound from the shoulder belt webbing 1A. Then, the potentiometer 30 detects the wound amount of the shoulder belt webbing 1A in the spool 12, i.e., equivalent of the paid out length, while the potentiometer (not shown) detects the wound amount of the lap belt webbing 1B in the reel shaft 39, so that the control device 62 stops driving the motor 14. That is, the state is returned to that before the seat belt is used.

In addition, the above-mentioned operation can be effectively performed when the shoulder belt webbing 1A is sufficiently wound onto the spool 12 of the first winding device 2 to such an extent that the webbing does not run out. However, there may be a case that all of the shoulder belt webbing 1A is paid out to run out due to the movement of the occupant, as shown in Fig. 6 (e). In this case, the run-out state is detected with a potentiometer 30, so that by promptly supplying electric current to the motor 14 from the control device 62 so as to wind up the shoulder belt webbing 1A, the lap belt webbing 1B is paid out from the reel shaft 39 by the required amount, as shown in Fig. 6 (f), so as to ensure the enough seat belt length accommodatable to the occupant movement. At this time, the spiral spring 35 with a small winding force may be lap belt webbing 1B used.

In addition, when a reduction ratio is small in the first winding device 2, there is no problem even when the motor 14 and the spool 12 are directly connected on demand so as to simultaneously rotate the motor shaft of the motor 14 during the payout of the shoulder belt webbing 1A. When the reduction ratio is large, the payout of the shoulder belt webbing 1A may be performed regardless of the shaft holding torque of the motor 14 by separating the motor shaft of the motor 14 from the spool 12 by using a clutch, etc. In addition, the stored state of the shoulder belt webbing 1A or the lap belt webbing 1B may be detected not only by the potentiometer 30 for detecting the stored state but also by the detection of the electric current level flowing through the motor 14, the measurement of the winding time of each belt with a timer, or the detection that the winding torque becomes a predetermined value (current measurement).

### [Advantages]

As described above, according to the present invention, a motor retractor system includes the first winding device having the motor driven in the winding direction of shoulder belt webbing, the second winding device having the tension-applying device for applying a constant tension in the winding direction to lap belt webbing which is continuing from the shoulder belt webbing via the through-tongue, and the control unit for controlling and driving the motor when the through-tongue mounted in the buckle is released from the buckle, so that while the payout of the shoulder belt webbing can be smoothly performed, when the through-tongue is mounted in the buckle, an occupant can be restrained lightly by the seat belt to such an extent that slack is eliminated, and when the through-tongue is removed from the buckle, the seat belt can be promptly stored onto the first winding device.

Since the motor of the first winding device is rotated in the winding direction by the control device when the through-tongue is removed from the buckle, the winding and storing by the first winding device can be promptly performed. Furthermore, by providing stored state detecting means for detecting the stored state of the shoulder belt webbing 1A or the lap belt webbing 1B, the seat belt length wound onto the first winding device and the seat belt length paid out from the second winding device can be substantially precisely monitored so as to control the stored belt amount in the first winding device to be a predetermined amount.

Moreover, when the stored state of the belt webbing detected by the stored state detecting means reaches a setting point, the winding of the shoulder belt webbing onto the first winding device is completed by the control device, so that the state can be promptly returned to that in which the re-payout of the seat belt can be performed.

Since when an occupant wears the shoulder belt webbing 1A and the lap belt webbing 1B, the winding is performed only with the second winding device without a winding force produced in the first winding device, there is an advantage that the occupant can be comfortably restrained on the seat due to the small restraining force produced by the second winding device.

## Claims

1. A motor retractor system comprising:
a first winding device (2) having a motor (14) driven in the winding direction of a shoulder belt webbing (1A);
a second winding device (5) having a tension-applying device (25) for applying a constant tension in the winding direction to a lap belt webbing (1B) which is continuing from the shoulder belt webbing (1A) via a through-tongue (4); and
a control unit (62) for controlling and driving the motor (14) when the through-tongue (4), which is mounted in a buckle (6), is released from the buckle (6)
**characterized in that**
the motor (14) is driven only when the through-tongue is released from the buckle.

2. A system according to Claim 1, wherein the control unit (62) rotates the motor (14) of the first winding device (2) in the winding direction when the through-tongue (4) is released from the buckle (6).

3. A system according to Claim 1 or Claim 2, further comprising belt-storage detecting means (30) disposed in one of the first winding device (2) and the second winding device (5) for detecting a stored state of one of the shoulder belt webbing (1A) and the lap belt webbing (1B).

4. A system according to Claim 3, wherein when the belt storage state detected by the belt-storage detecting means (30) reaches a predetermined point, the winding of the shoulder belt webbing (1A) by the first winding device (2) is stopped.

5. A system according to any one of Claims 1-4, wherein when an occupant is wearing the shoulder belt webbing (1A) and the lap belt webbing (1B), a winding force is generated only in the second winding device (5) without generating the winding force in the first winding device (2).

## Patentansprüche

1. Motorisierte Aufrollvorrichtung umfassend:
eine erste Aufwickeleinrichtung (2) mit einem Motor (14), welcher in die Aufwickelrichtung eines Schultergurtbandes (1A) angetrieben wird,
eine zweite Aufwickeleinrichtung (5) mit einer spannungsbeaufschlagenden Einrichtung (25) zum Beaufschlagen eines Hüftgurtbandes (1B), welches sich von dem Schultergurtband (1A) über eine Zunge (4) mit einem Durchgang fortsetzt, mit einer konstanten Spannung in der Aufwickelrichtung, und
eine Steuereinheit (62) zum Steuern und Antreiben des Motors (14), wenn die Zunge (4) mit Durchgang, welche in einem Gurtschloss (6) angebracht ist, von dem Gurtschloss (6) gelöst wird,
**dadurch gekennzeichnet,**
**dass** der Motor (14) nur dann angetrieben wird, wenn die Zunge mit Durchgang aus dem Gurtschloss gelöst ist.

2. Vorrichtung nach Anspruch 1, wobei die Steuereinheit (62) den Motor (14) der ersten Aufwickeleinrichtung (2) in die Aufwickelrichtung dreht, wenn die Zunge (4) mit Durchgang aus dem Gurtschloss (6) gelöst wird.

3. Vorrichtung nach Anspruch 1 oder Anspruch 2, weiterhin umfassend Gurtspeichererfassungsmittel (30), welche in der ersten Aufwickeleinrichtung (2) oder der zweiten Aufwickeleinrichtung (5) angeordnet sind, um einen verstauten Zustand entweder des Schultergurtbandes (1A) oder des Hüftgurtbandes (1B) zu erfassen.

4. Vorrichtung nach Anspruch 3, wobei das Aufwickeln des Schultergurtbandes (1A) durch die erste Aufwickeleinrichtung (2) angehalten wird, wenn der verstaute Zustand des Gurtes, welcher von den Gurtspeichererfassungsmitteln (30) erfasst wird, einen vorgegebenen Punkt erreicht.

5. Vorrichtung nach einem der Ansprüche 1-4, wobei eine Aufwickelkraft nur in der zweiten Aufwickeleinrichtung (5) erzeugt wird, ohne dass die Aufwickelkraft in der ersten Aufwickeleinrichtung (2) erzeugt wird, wenn ein Insasse das Schultergurtband (1A) und das Hüftgurtband (1B) trägt.

## Revendications

1. Système de rétracteur motorisé comprenant :
un premier dispositif d'enroulement (2) comportant un moteur (14) entraîné dans le sens d' enroulement d'une sangle de ceinture diagonale (1A) ;
un second dispositif d'enroulement (5) comportant un dispositif d'application de tension (25) pour appliquer une tension constante dans le sens d'enroulement à une sangle de ceinture ventrale (1B) qui prolonge la sangle de ceinture diagonale (1A) par l'intermédiaire d'une languette (4) ; et
une unité de commande (62) pour commander et entraîner le moteur (14) quand la languette (4), qui est montée dans une boucle (6), est libérée de la boucle (6),
**caractérisé en ce que**
le moteur (14) est entraîné uniquement quand la languette est libérée de la boucle.

2. Système selon la revendication 1, dans lequel l'unité de commande (62) entraîne le moteur (14) du premier dispositif d'enroulement (2) dans le sens d'enroulement quand la languette (4) est libérée de la boucle (6).

3. Système selon la revendication 1 ou la revendication 2, comprenant en outre un moyen de détection de rangement de ceinture (30) disposé dans l'un du premier dispositif d'enroulement (2) et du second dispositif d'enroulement (5) pour détecter un état de rangement de l'une de la sangle de ceinture diagonale (1A) et de la sangle de ceinture ventrale (1B).

4. Système selon la revendication 3, dans lequel lorsque l'état de rangement de ceinture détecté par le moyen de détection de rangement de ceinture (30) atteint un point prédéterminé, l'enroulement de la sangle de ceinture diagonale (1A) par le premier dispositif d'enroulement (2) s'arrête.

5. Système selon l'une quelconque des revendications 1 à 4, dans lequel, lorsqu'un occupant porte la sangle de ceinture diagonale (1A) et la sangle de ceinture ventrale (1B), une force d'enroulement est générée uniquement dans le second dispositif d'enroulement (5) sans générer de force d'enroulement dans le premier dispositif d'enroulement (2).
